# EUROPEAN PATENT APPLICATION

(11) **EP 3 079 107 A1**
(43) Date of publication of application: **12.10.2016**
(21) Application number: 14867074.8
(22) Date of filing: 20.11.2014
(51) Int. Cl.: G06Q 10/00, G06F 13/00, G06Q 30/02, G06Q 50/10, G08B 21/02, G08B 25/04

(54) **LIFESTYLE-SERVICES SUGGESTION SYSTEM**

(30) Priority: 05.12.2013 JP 2013252533
(71) Applicant: Panasonic Intellectual Property Management Co., Ltd., Osaka-shi, Osaka 570-6207 (JP)
(72) Inventor: MATSUO, Nobuo, Osaka-shi, Osaka 540-6207 (JP); UENO, Takeshi, Osaka-shi, Osaka 540-6207 (JP); KAWASAKI, Toshinobu, Osaka-shi, Osaka 540-6207 (JP)
(74) Representative: Appelt, Christian W.
(86) International application number: PCT/JP2014/005843
(87) International publication number: WO 2015/083338

(57) **Abstract**

In order to provide service information suitable for a user of an appliance based on only information on resource consumption, a life style-services suggestion system includes: an obtainer (11) that obtains, from a measuring device (32), resource consumption per unit time by a specific appliance (31) in a building (30); a monitor (12) that identifies, as behavior information, presence or absence of a specific behavior associated with usage of the appliance (31) for a management period based on the consumption obtained by the obtainer (11) for the management period; and a provider (13) that allows a presentation device (20) to present service information associated with the specific behavior in case the behavior information represents the absence of the specific behavior for the management period.

## Description

### Technical Field

The invention relates to a life style-services suggestion system configured to provide information on life related services.

### Background Art

There has been a conventional technique in which a service provider provides appliance users with services by analyzing stored information on types and operation contents of household electrical appliances (for example, JP Pub. No. 2011-155445 (hereinafter referred to as "Document 1")). Document 1 describes a monitoring service, an eco-loyalty program and a recommendation service for services provided by the service provider.

In the monitoring service, when a television set or a thermo pot is inactivated continuously for a prescribed period of time or more, it is determined that an aged person is in poor of health and an alarm is then transmitted to his or her child (the family of the aged person) or a health care facility in which the aged person is taken care of.

In the eco-loyalty program, eco-points are given to the appliance users when power consumption is reduced as a result of comparison between power consumption of household electrical appliances and recommended power consumption. If a certain household electrical appliance causes hindrance to the reduction in power consumption, the replacement of the household electrical appliance is recommended to a user thereof.

In the recommendation service, user's favorite TV programs are specified based on behavior information about the amount of time spent on viewing and the channels being viewed through the television set, whereby related products are suggested to the user. In the recommendation service, the behavior information can be also used for calculation of an audience rating and program advertising expenses.

The monitoring service and the eco-loyalty program of the services described in Document 1 can be provided by analyzing the types of household electrical appliances and the power consumption. However, the monitoring service and the eco-loyalty program cannot provide life related information for improving life convenience.

On the other hand, the recommendation service can provide information in view of user's favorites, but requires information such as channels being viewed except for electricity. That is, the technology described in Document 1 requires the information except for electricity in order that the service provider provides service information suitable for users, thereby complicating information management and processing.

### Summary of Invention

It is therefore an object of the present invention to provide a life style-services suggestion system capable of providing service information suitable for a user of an appliance based on only information on resource consumption by the appliance.

A life style-services suggestion system according to the present invention includes an obtainer, a monitor and a provider. The obtainer is configured to obtain, from a measuring device, resource consumption by a specific appliance in a building. The monitor is configured to identify presence or absence of a specific behavior associated with usage of the specific appliance for a prescribed management period based on a change in the consumption obtained by the obtainer for the management period, and output an identified result as behavior information. The provider is configured to allow a presentation device to present service information associated with the specific behavior in case the behavior information represents the absence of the specific behavior for the management period.

The invention identifies the presence or absence of the specific behavior associated with the usage of the specific appliance for the management period based on a change in the resource consumption by the specific appliance, and presents service information associated with the specific behavior when the specific behavior has not been performed for the management period. It is therefore possible to provide service information suitable for a user of the specific appliance based on only information on resource consumption.

### Brief Description of Drawings

Preferred embodiments of the invention will now be described in further details. Other features and advantages of the present invention will become better understood with regard to the following detailed description and accompanying drawings where:

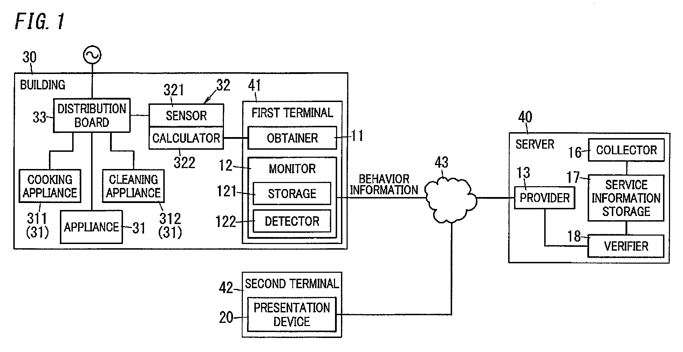

FIG. 1 is a block diagram of an embodiment.

### Description of Embodiments

As shown in FIG. 1, a life style-services suggestion system to be explained below includes an obtainer 11, a monitor 12 and a provider 13. The obtainer 11 is configured to obtain, from a measuring device 32, resource consumption by a specific appliance 31 in a building 30. The monitor 12 is configured to identify the presence or absence of a specific behavior associated with the usage of the specific appliance 31 for a prescribed management period based on a change in the consumption obtained by the obtainer 11 for the management period, and output an identified result as behavior information. The provider 13 is configured to allow a presentation device 20 to present service information associated with the specific behavior in case the behavior information represents the absence of the specific behavior for the management period.

The monitor 12 includes a storage 121 and a detector 122. The storage 121 is configured to store a normal range for the consumption, with the normal range associated with specific behavior, while the specific behavior is performed with the specific appliance 31 for the management period. The detector 122 is configured to compare the consumption obtained by the obtainer 11 for the management period with the normal range stored in the storage 121. The detector 122 is further configured to, when the consumption is out of the normal range, identify the absence of the specific behavior stored in the storage 121 for the management period.

In an example, the specific appliance 31 is a cooking appliance 311. The monitor 12 is configured to, when the consumption by the cooking appliance 311 for the management period is out of the normal range, identify the absence of cooking as the specific behavior in the building 30 for the management period.

In an example, the specific appliance 31 is a cleaning appliance 312. The monitor 12 is configured to, when the consumption by the cleaning appliance 312 for the management period is out of the normal range, identify the absence of cleaning as the specific behavior in the building 30 for the management period.

The monitor 12 may be configured to identify the absence of a user of the building 30 therein as the specific behavior for the management period when the specific appliance 31 has not been in operation for the management period.

In an example, the building 30 is a dwelling. It is desirable that the monitor 12 include a function configured to detect user's return to the building 30 (dwelling) based on a change in the consumption obtained by the obtainer 11 and be configured to allow the presentation device 20 to present the service information in response to the return detected.

It is desirable that the life style-services suggestion system further include a collector 16, a service information storage 17 and a verifier 18. In this case, the obtainer 11, the monitor 12 and the presentation device 20 are provided for each of two or more buildings 30. Each of the presentation devices 20 may be provided in a corresponding building 30, or may be carried with a user of the corresponding building 30 (a dweller in the case of the dwelling). The whole system may be provided with only one monitor 12, or the two or more buildings 30 may be provided with respective monitors 12. Similarly, the whole system may be provided with only one obtainer 11, or the two or more buildings 30 may be provided with respective obtainers 11. The collector 16 is configured to collect behavior information detected by each of the monitors 12 of the two or more buildings 30. The service information storage 17 is configured to store contents of pieces of service information with the pieces of service information associated with respective conditions for targets to be provided with. The verifier 18 is configured to choose one as a target (a presentation device 20), of which behavior information satisfies any of the conditions stored in the service information storage 17, of the presentation devices 20 provided for the two or more buildings 30. The provider 13 is configured to allow the target (the presentation device 20) chosen by the verifier 18 to present a content of service information associated with the satisfied condition in the service information storage 17.

It is also desirable that the collector 16 be configured to collect user information on a user of each of the two or more buildings 30 in addition to the pieces of behavior information. In this configuration, the verifier 18 is configured to choose one as a target (a presentation device 20), of which behavior information and user information satisfy any of the conditions stored in the service information storage 17, of the presentation devices 20.

It is desirable that the life style-services suggestion system include two or more first terminals 41; a server 40 including the collector 16, the service information storage 17, the verifier 18 and the provider 13; and two or more second terminals 42. In this case, the obtainer 11 is provided for each of the two or more first terminals 41, and the presentation device 20 is provided for each of the two or more second terminals 42. It is also desirable that the two or more first terminals 41, the server 40 and the two or more second terminals 42 be configured to communicate via a telecommunications network 43 such as the Internet or a mobile telecommunications network.

A configuration of the embodiment is hereinafter explained in detail. As an example, the configuration includes first terminals 41 configured to be disposed in respective buildings 30, and a server 40 configured to communicate with the first terminals 41 via a telecommunications network 43 such as the Internet. Each of the buildings 30 is a dwelling for example.

The server 40 is not limited to a configuration in which hardware resources are centralized, but may be a configuration in which computers are decentralized and configured to cooperate with each other like one server 40. The latter is constructed as a cloud computing system.

In the embodiment to be explained below, a building 30 of the buildings (the dwellings) 30 is explained as a representative example as shown in FIG. 1. In the example, a specific appliance 31 (hereinafter referred to as an "appliance 31") in the building (the dwelling) 30 is configured to operate by electricity as resource. However, the technology to be explained below can be applied even to an appliance 31 configured to operate by gas or water as resource. In case an appliance 31 for cooking, hot-water supply, heating or the like is configured to operate by gas, an operating condition of the appliance 31 can be grasped by monitoring gas consumption measured with a gas-meter. In case an appliance 31 for water supply, hot-water supply or the like is configured to operate with a tap water as resource, an operating condition of the appliance 31 can be grasped by monitoring water consumption measured with a water-meter.

In the embodiment, since the appliance 31 is configured to operate by electricity as resource, resource consumption by the appliance 31 corresponds to power consumption that is measured by a measuring device 32 disposed around or in a distribution board 33 in the building 30. The measuring device 32 includes sensors 321 which are provided for respective branch circuits divided in a distribution board 33 from a grid and configured to measure electric currents passing through the respective branch circuits. (FIG. 1 illustrates only one sensor 321 for simplicity). The measuring device 32 includes a calculator 322 configured to calculate electric energy per unit time consumed by each of the branch circuits based on electric currents measured with the sensors 321 and line voltages of the branch circuits. Examples of each sensor 321 include a clamp current transformer configured to be attached to a branch circuit, a Rogowski coil built in the distribution board 33, and the like.

Examples of the unit time include 30 seconds, 1 minute, 2 minutes, 5 minutes and 10 minutes. In addition, electric energy per unit time that is shorter than the examples can be measured. The measuring device 32 may be configured to measure electric energy not for each of the branch circuits but for each of the appliances 31. When the unit time is set to a time period such that fluctuation in an instantaneous value of electric power can be excluded, a mean value of electric energy per unit time can be regarded as an instantaneous value of electric power. Hereinafter, electric energy consumed per unit time is referred to as "power consumption". When the unit time is shortened sufficiently, a change over time in power consumption may represent a feature of a corresponding appliance 31. It is therefore possible to be provided with a configuration in which a type of the appliance 31 is identified by analyzing a transition (a change over time) of power consumption. In order to identify the type of the appliance 31, the feature may be extracted from not a change in power consumption but a change in an instantaneous value of an electric current therethrough. Various technologies of this kind have been proposed and therefore the discussion in detail is omitted.

In the distribution board 33 in the building 30, an individual branch circuit is generally provided for each of appliances 31 having comparatively large power consumption, such as an air conditioner, a microwave oven and an IH (Induction Heating) cooking heater. In the distribution board 33, a branch circuit per room is often provided for appliances configured to be plugged in an outlet and appliances 31 having comparatively small power consumption such as light fixtures. It is possible to obtain power consumption per appliance 31 from power consumption per branch circuit measured with the measuring device 32 not only when branch circuits are provided for individual appliances 31 but also when branch circuits are provided for respective rooms. For example, it is possible to obtain power consumption per appliance 31 by identifying the type of the appliance 31 based on a change over time in power consumption as stated above. Therefore, measuring of power consumption per branch circuit by the measuring device 32 may be equivalently regarded as measuring of power consumption per appliance 31 in practical use.

An example for identifying the presence or absence of a specific behavior by a dweller based on power consumption measured for each of the branch circuits will be hereinafter explained. Examples of the behavior in the embodiment include three kinds such as "cooking", "cleaning" and "staying home". Other behaviors such as "bathing", "laundering" and "hands and face washing" can be dealt with, but only the three kinds of behaviors are explained for simplicity.

Behavior "cooking" about whether or not an appliance 31 for cooking such as a rice cooker, a toaster, a microwave oven or a cooking heater has been used in a kitchen can be identified from a change in power consumption by a corresponding branch circuit. Behavior "cleaning" about whether or not an appliance 31 for cleaning such as a vacuum cleaner has been used can be identified based on a change in power consumption by a predetermined branch circuit(s). Behavior "staying home" can be regarded as a dweller being "staying home" based on standby power of the whole home with no appliance 31 used, namely if power consumption thereof is larger than the standby power consumption and a difference between the power consumption and the standby power consumption is equal to or more than a threshold.

A dweller behavior per building 30 is often made a habit of in general, and often repeats the same behavior a day or a week, for example. The type of the behavior can be therefore identified by monitoring a transition in power consumption per management period of a day or a week.

As can be seen from the abovementioned knowledge, it is possible to identify the presence or absence of a specific behavior in the building 30 by a dweller thereof based on power consumption per branch circuit for an appropriate management period. The life style-services suggestion system in the embodiment therefore includes components below.

That is, the first terminal 41 includes the obtainer 11 configured to obtain power consumption per branch circuit from the measuring device 32. The obtainer 11 is configured to obtain power consumption of a branch circuit(s) associated with a specific behavior to be monitored. When a time period in which the specific behavior is performed by the dweller is known, the obtainer 11 may be configured to obtain power consumption of a predetermined branch circuit(s) for a management period that is set to the known time period. The first terminal 41 may be a controller of HEMS (Home Energy Management System). This kind of controller has a function configured to obtain electric power measured with the measuring device 32 and a function configured to manage an operation(s) of an appliance(s) 31 in the building 30 by communicating with the appliances 31.

The power consumption obtained by the obtainer 11 is stored in a storage provided in the obtainer 11, and given to the monitor 12 by request. In an example of the figure, the monitor 12 is provided in the first terminal 41, but may be provided in the server 40. Similarly, in the example of the figure, the obtainer 11 is provided in the first terminal 41, but may be provided in the server 40.

The monitor 12 is configured to calculate an integrated value of power consumption (electric energy) for the management period based on power consumption obtained by the obtainer 11 for the management period, and to identify the presence or absence of an estimated specific behavior for the management period based on the electric energy calculated. The monitor 12 is configured to output behavior information in response to whether or not the specific behavior has been performed.

For example, when any branch circuit is predetermined in order to identify the presence or absence of the specific behavior, the monitor 12 calculates an integrated value of power consumption thereof for the management period. The integrated value is then compared with a normal range that is predetermined as a standard for identifying the presence of the specific behavior for the management period. When the integrated value is out of the normal range, it identifies the absence of the specific behavior.

The monitor 12 can determine whether the integrated value of power consumption is in the normal range or out of the normal range, not only when a branch circuit is connected with one appliance 31 but also when one branch circuit is connected with two or more appliances 31. In the case of the latter, individual power consumption of the appliances 31 connected to the branch circuit may be obtained in advance or a change in power consumption of the branch circuit for the management period may be obtained in advance.

The monitor 12 includes a storage 121 configured to store the normal range, and a detector 122 configured to identify the absence of the specific behavior to be monitored when the integrated value is out of the normal range. For example, the detector 122 compares electric energy, calculated from the power consumption obtained by the obtainer 11 for the management period, with the normal range stored in the storage 121, and then outputs a comparison result. The monitor 12 therefore outputs an identified result by the detector 122 as behavior information.

For example, the normal range is determined based a mean value and dispersion of daily power consumption per appliance 31 or based on a mean value and dispersion of a usage time while the appliance 31 is used one time. In this case, based on a mean value of the power consumption or the usage time, the normal range may be a few times (about one to three times) as large as the dispersion. In this example, the normal range is given by α +/- no, where n is 1 to 3, α is the mean value and σ is the dispersion. The normal range has an upper limit and a lower limit. Such a normal range is automatically determined by collecting power consumption of the appliance 31 for a prescribed time period.

In order to obtain a mean value and dispersion of power consumption or usage time, the server 40 may communicate with the first terminal 41 and collect power consumption per appliance 31 for the prescribed time period. The mean value and dispersion are obtained with power consumption collected set to statistical population of measurement values. When the server 40 collects power consumption, the server 40 desirably classifies respective power consumption collected into user's attributes such as age group, gender and region, and determines a normal range per appliance 31 in a classified range. When normal ranges are classified into the user's attributes, a normal range similar to a user's (a dweller's) attribute of the building 30 may be chosen and transmitted from the server 40 to the first terminal 41 in the building 30.

In an operation example stated above, the normal ranges are generalized according to the user's attributes, but the first terminals 41 may collect respective power consumption of the buildings 30 for the prescribed time period, and determine respective normal ranges for users (dwellers) of the buildings 30. That is, instead of the way in which the server 40 collects power consumption, a first terminal 41 per building 30 may collect power consumption per appliance 31 to determine a normal range(s) based on the collected power consumption like the example stated above. Thus, an individual normal range(s) can be obtained per building 30.

In case the normal ranges are classified into user's attributes, each normal range can be provided with locality by forming a statistical population that is a set of units such as city, town and village as well as local communities. Similarly, in case the normal ranges are determined by collecting power consumption per building 30, the normal ranges may be determined based on a mean value and dispersion of power consumption obtained by condensing power consumption per building 30 in a range such as city, town and village as well as local communities.

In case one building 30 is used by two or more persons, user's attributes may include not individual age group and gender but a combination of age group and gender for two or more persons. For example, when a family of four dwells in the building 30, a configuration of the dwellers may be dealt as one attribute in a lump.

Each normal range has an upper limit and a lower limit but may have only a lower limit or only an upper limit. For example, according to a configuration in which only a lower limit of a normal range is defined, the monitor 12 may be configured to, when electric energy is less than a standard value that is the lower limit of the normal range, output behavior information representing the absence of the specific behavior. In case the monitor 12 identifies the presence or absence of the specific behavior by comparing the integrated value of power consumption with the normal range, it identifies the absence of the specific behavior if the value is out of the normal range even when the specific behavior is present in fact. Accordingly, specific behaviors may be arranged in rank order according to two or more ranks into which the integrated value is classified. Thus, they are arranged in rank order, whereby service contents to be described later can be varied according to the ranks.

The behavior information output from the monitor 12 is given to the provider 13. The provider 13 allows the presentation device 20 to present service information associated with the specific behavior when the behavior information represents the absence of the specific behavior for the management period. The provider 13 is provided in the server 40.

It is conceivable that the absence of user's specific behavior for the management period is caused by a shortage of time for the user's specific behavior or a shortage of will or physical strength for performing the behavior. That is, it may be asserted that the user has potential possibility of accepting the service associated with the behavior. In other words, users having high possibility of using the service know the existence of the service provider, whereby a chance of the service usage may be increased. When the behavior information represents the absence of the specific behavior, service information associated with the behavior is provided for a corresponding user, whereby the user may be provided with convenience. In addition, the service provider may get profit.

When the monitor 12 is provided in the building 30, the provider 13 in the server 40 just needs receiving the behavior information. Therefore, the communications traffic in the telecommunications network 43 can be prevented from increasing. On the other hand, when the monitor 12 is provided in the server 40, a rule for generating the behavior information can be concentrated on the server 40 and does not need to be dispersed to the individual buildings 30. Accordingly, the rule can be managed uniformly and the processing load on the first terminal 41 can be reduced.

The presentation device 20 may be a dedicated device configured to be connected with the first terminal 41, but it is desirable to be an all-purpose computer. Desirable examples of the presentation device 20 include computers with a display device, such as a personal computer, a smartphone and a tablet terminal, having a communicator.

In a configuration in which the presentation device 20 is a dedicated device, service information is pushed from the server 40 to the presentation device 20. On the other hand, in a configuration in which the presentation device 20 is such a computer, the computer functions as the second terminal 42. The second terminal 42 may receive service information by accessing the server 40, but desirably receives service information by an Internet advertising method.

That is, the second terminal 42 not accesses the service information by specifying the address of the server 40 but desirably receives a notice by advertisement display or mail to access the service information. In case the second terminal 42 is a smartphone, a tablet terminal or the like, it may be provided with a dedicated application program (what is called app) for accessing the service information.

In case the second terminal 42 is provided with the service information by Internet advertising technology, the server 40 may be configured to participate in an advertisement distribution network (what is called ad network) to provide service information via numerous websites.

Service information presented by the presentation device 20 can be provided by an administrator of the server 40, but the service information may have a monotonous content. It is therefore desirable to collect service information from each of numerous providers for providing service to present the provided service information to necessary dwellers. In short, the service information is desirably matched with a user so that service information having an appropriate content is provided based on behavior information by the user of the building 30.

The server 40 therefore includes: a function configured to collect behavior information by each user (dweller) of two or more buildings 30; a function configured to store pieces of service information collected from a service provider(s); and a function configured to associate each dweller of the buildings 30 with any of the pieces of service information. That is, the server 40 has the collector 16, the service information storage 17 and the verifier 18.

The collector 16 has a function configured to collect user information such as address, gender and age group about each user of the buildings 30, and behavior information detected with the monitor 12. The user information includes information for identifying the first terminals 41 and the second terminals 42. The user information includes gender, age group, address and the like in order to increase accuracy for matching with service information. Therefore, such address, gender and age group are not indispensable to the user information. Conversely, the user information may include other information exclusive of address, gender and age group owing to market segmentation.

The service information storage 17 has a function configured to store each content of the pieces of service information collected from the service provider(s) with each content associated with a condition for a target to be provided with. When the server 40 is configured to communicate with a terminal device managed by the service provider(s) via the telecommunications network 43, it is desirable that the server 40 be configured to obtain service information via the telecommunications network 43 to store the service information in the service information storage 17. The service provider(s) is(are) any of various business entities (company, NPO, individual and the like) and mainly classified into life-related service industry.

A provision range (a demographic condition, a psychographic condition or the like) may be set for such service provision. For example, the service provider(s) cannot provide service if no user to be provided with service therefrom dwells in a region to be provided with the service. Restriction such as age and gender may be imposed on the service according to the content. The service information storage 17 therefore stores conditions for targets to be provided with service, with respect to service information contents.

In the embodiment, behavior information corresponds to any of "cooking", "cleaning" and "staying home" as stated above. Examples of the service provider(s) associated with such behavior include food delivery service entity, housekeeping service entity, security service entity (security company) and the like. The service provision also includes advertisement provision associated with each region of the buildings 30.

For example, in case an appliance 31 is a cooking appliance 311, the monitor 12 identifies the absence of cooking behavior in the building 30 if electric energy consumed by the cooking appliance 311 for a management period is out of the normal range. As a result, the monitor 12 outputs behavior information representing the absence of "cooking" for the management period. In this case, it is estimated that the user of the building 30 lacks for cooking and the provider 13 allows the presentation device 20 to present service information for food delivery or housekeeping.

In case an appliance 31 is a cleaning appliance 312, the monitor 12 identifies the absence of cleaning behavior in the building 30 if electric energy consumed by the cleaning appliance 312 for a management period is out of the normal range. As a result, the monitor 12 outputs behavior information representing the absence of "cleaning" for the management period. In this case, it is estimated that the user of the building 30 lacks for cleaning and the provider 13 allows the presentation device 20 to present service information for housekeeping.

It is possible to identity the presence (as staying home) or absence (as going out) of a dweller in the building 30 by monitoring power consumption by the specific appliances 31 in the building 30. That is, the power consumption in the building 30 increases in the presence of the dweller, and the power consumption in the building 30 decreases in the absence of the dweller. Accordingly, if power consumption consumed by the appliances 31 in the whole building 30 for a management period is out of the normal range, the monitor 12 outputs behavior information representing not "staying home" but going out. In this case, it is considered that the user of the building 30 needs service for going out, whereby the provider 13 allows the presentation device 20 to present service information for security.

It is further desirable to confirm staying home in case service includes a content for home delivery (for receiving food, parcel or the like). Therefore, in the case of providing this kind of service, the server 40 desirably provides service information when identifying staying home based on behavior information from the monitor 12. It is also desirable that the server 40 provide service information from the security service entity if a time period corresponding to the dweller's absence is contained in the management period.

It is noted that the service information can be provided regardless of the dweller's presence or absence in the building when the abovementioned presentation device 20 is a smartphone or a tablet terminal. On the other hand, it is desirable to provide service information during staying home when the presentation device 20 is in the building 30.

It is also desirable that the monitor 12 have a function configured to detect user's (dweller's) return to the dwelling based on a change in power consumption (electric power per unit time) obtained by the obtainer 11. In this case, the monitor 12 identifies the return if power consumption increases according to the return from a state in which power consumption in the whole building 30 is standby power consumption. According to the detection of the return, the monitor provides the provider 13 with an instruction so as to allow the presentation device 20 to present service information. The service information is accordingly presented by the presentation device 20 when the dweller returns to the dwelling, and can be provided at a timing the dweller easily pays attention to.

Behavior information and user information need an analysis of association with service information and defining a rule(s). According to the defined rule(s), the verifier 18 is configured to, whenever the collector 16 collects behavior information and user information from any of the buildings 30, check them with each service information and a condition to be provided therewith stored in the service information storage 17, and to choose a presentation device 20 managed by a user satisfying a condition.

As stated above, the provider 13 has a function configured to allow the presentation device 20 to present service information associated with a specific behavior with respect to behavior information representing the absence of the specific behavior for a management period. Therefore, when the verifier 18 chooses a presentation device 20 managed by a user corresponding to the appropriate service information, the provider 13 transmits the service information to the second terminal 42 corresponding to the presentation device 20.

As a result, it is possible to provide the user of the building 30 with service information having high usability by the user. There is known a general technology that analyzes histories such as product purchase or service usage to provide users with similar products and services. In contrast, the embodiment can provide service information not based on a past usage history of product purchase and service usage but based on user's behavior for a management period. Moreover, the user is provided with service information associated with the absence of specific behavior by the user for the management period, whereby the user can be provided with service which the user may lack (service which the user may desire). As a result, it is possible to increase a possibility that the service is used by the user, namely that service usage frequency is increased with respect to the provided number of the service information.

In the abovementioned example, data is transmitted from the first terminal 41 provided with the obtainer 11 to the server 40 via the telecommunications network 43, and service information is transmitted from the server 40 to the second terminal 42 provided with the presentation device 20. However, a device including the obtainer 11, the monitor 12, the provider 13 and the presentation device 20 may be provided in the building 30, and configured to communicate with a terminal device managed by a business entity providing service, thereby allowing the presentation device 20 to present necessary service information.

Kinds of specific behavior to be monitored by the monitors 12 and a content of service information to be provided by the provider 13 are not limited to the abovementioned examples, but may be defined appropriately. That is, though several configurations as stated above are just examples, numerous modifications can be made within the scope without departing from claims.

## Claims

1. A life style-services suggestion system, comprising:
an obtainer configured to obtain, from a measuring device, resource consumption by a specific appliance in a building;
a monitor configured to
identify presence or absence of a specific behavior associated with usage of the specific appliance for a prescribed management period based on a change in the resource consumption obtained by the obtainer for the management period, and
output an identified result as behavior information; and
a provider configured to allow a presentation device to present service information associated with the specific behavior in case the behavior information represents the absence of the specific behavior for the management period.

2. The life style-services suggestion system of claim 1, wherein the monitor comprises:
a storage configured to store a normal range for the consumption, with the normal range associated with the specific behavior, while the specific behavior is performed with the specific appliance for the management period; and
a detector configured to compare the consumption obtained by the obtainer for the management period with the normal range stored in the storage, the detector being configured to, when the consumption is out of the normal range, identify the absence of the specific behavior stored in the storage for the management period.

3. The life style-services suggestion system of claim 2, wherein
the specific appliance is a cooking appliance, and
the monitor is configured to, when the consumption by the cooking appliance for the management period is out of the normal range, identify the absence of cooking as the specific behavior in the building for the management period.

4. The life style-services suggestion system of claim 2, wherein
the specific appliance is a cleaning appliance, and
the monitor is configured to, when the consumption by the cleaning appliance for the management period is out of the normal range, identify the absence of cleaning as the specific behavior in the building for the management period.

5. A life style-services suggestion system of claim 1 or 2, wherein the monitor is configured to identify the absence of a user of the building therein as the specific behavior for the management period when the specific appliance has not been in operation for the management period.

6. A life style-services suggestion system of any one of claims 1 to 5, wherein
the building is a dwelling,
the monitor comprises a function configured to detect user's return to the dwelling based on a change in the consumption obtained by the obtainer, and is configured to allow the presentation device to present the service information in response to the return detected.

7. A life style-services suggestion system of any one of claims 1 to 6, wherein
the obtainer, the monitor and the presentation device are provided for each of two or more buildings;
the life style-services suggestion system further comprises
a collector configured to collect behavior information detected by each of the monitors of the two or more buildings,
a service information storage configured to store contents of pieces of service information with the pieces of service information associated with respective conditions for targets to be provided with, and
a verifier configured to choose one as a target, of which behavior information satisfies any of the conditions stored in the service information storage, of the presentation devices provided for the two or more buildings; and
the provider is configured to allow the target chosen by the verifier to present a content of service information associated with the satisfied condition in the service information storage.

8. The life style-services suggestion system of claim 7, wherein
the collector is configured to collect user information on a user of each of the two or more buildings in addition to the pieces of behavior information, and
the verifier is configured to choose one as a target, of which behavior information and user information satisfy any of the conditions stored in the service information storage, of the presentation devices.

9. The life style-services suggestion system of claim 7, comprising:
two or more first terminals;
a server comprising the collector, the service information storage, the verifier and the provider; and
two or more second terminals, wherein
the obtainer is provided for each of the two or more first terminals,
the presentation device is provided for each of the two or more second terminals, and
the two or more first terminals, the server and the two or more second terminals are configured to communicate via a telecommunications network.
